# EUROPÄISCHE PATENTSCHRIFT

(11) **EP 3 785 510 B1**
(45) Veröffentlichungstag und Bekanntmachung des Hinweises auf die Patenterteilung: **05.07.2023**
(21) Anmeldenummer: 20190401.8
(22) Anmeldetag: 11.08.2020
(51) Int. Cl.: A01C 7/08, A01C 7/12, A01C 21/00, A01C 7/06

(54) **LANDWIRTSCHAFTLICHE VERTEILMASCHINE ZUM VERTEILEN UNTERSCHIEDLICHER VERTEILGÜTER**
AGRICULTURAL DISTRIBUTOR FOR DISTRIBUTING A VARIETY OF MATERIALS
MACHINE D'ÉPANDAGE AGRICOLE PERMETTANT DE DISTRIBUER DIVERS PRODUITS D'ÉPANDAGE

(30) Priorität: 27.08.2019 DE 102019122913
(43) Veröffentlichungstag der Anmeldung: 03.03.2021
(73) Patentinhaber: Horsch Maschinen GmbH, 92421 Schwandorf (DE)
(72) Erfinder: Pirkenseer, Michael, 92421 Schwandorf (DE)
(74) Vertreter: v. Bezold & Partner Patentanwälte - PartG mbB

(56) Entgegenhaltungen:
- CA-A1- 2 685 239
- DE-A1-102008 050 735
- US-A1- 2012 211 508
- US-A1- 2016 095 274
- US-B2- 8 635 963

## Beschreibung

Die Erfindung betrifft eine landwirtschaftliche Verteilmaschine zum Verteilen unterschiedlicher (insbesondere granulatartiger) Verteilgüter, z. B. zum selektiven Umschalten einer Ausgabe zwischen den unterschiedlichen Verteilgütern, und ein Verfahren zum Steuern einer derartigen landwirtschaftlichen Verteilmaschine.

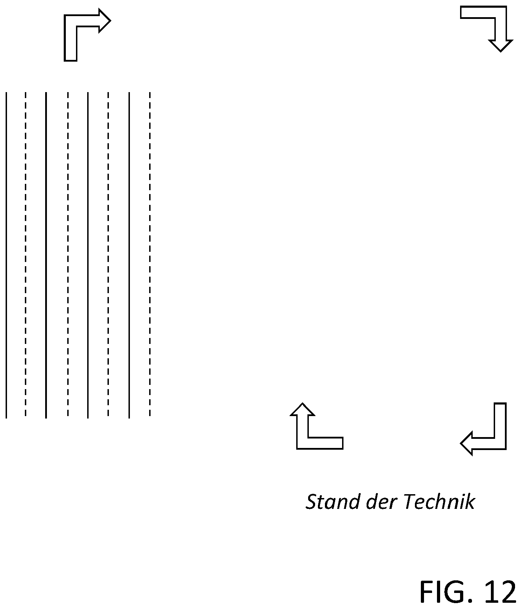

Im Stand der Technik sind landwirtschaftliche Verteilmaschinen zum Verteilen granulatartiger unterschiedlicher Verteilgüter (z. B. Saatgut, Dünger etc.) in den unterschiedlichsten Ausführungsformen bekannt. Figur 12 zeigt schematisch ein übliches Verteilgutausbringmuster mit zwei unterschiedlichen Verteilgütern. Dabei werden die unterschiedlichen Verteilgüter mittels einer Vielzahl an Säscharen der landwirtschaftlichen Verteilmaschinen in abwechselnder Reihenfolge verteilt. Ein Problem dabei ist allerdings, dass die landwirtschaftlichen Verteilmaschinen oftmals eine in Figur 12 durch vier Wendepfeile symbolisch dargestellte ineffiziente 360°-Wende fahren müssen, um das Verteilgutausgabemuster mit abwechselnder Reihenfolge der unterschiedlichen Verteilgüter fortsetzen zu können. Weiterer, relevanter Stand der Technik wird in der US 2012/211508 A1 und der US 2016/095274 A1 offenbart.

Eine Aufgabe der Erfindung ist es, eine alternative und/oder verbesserte landwirtschaftliche Verteilmaschine zu schaffen, vorzugsweise eine landwirtschaftliche Verteilmaschine, mit der unterschiedliche Verteilgüter insbesondere effizient, variabel, positionsabhängig und/oder fahrtrichtungsabhängig ausgebracht werden können.

Die Erfindung betrifft eine landwirtschaftliche Verteilmaschine, gemäß Anspruch 1, zum Verteilen unterschiedlicher (insbesondere granulatartiger) Verteilgüter und vorzugsweise zum selektiven Umschalten einer Ausgabe zwischen den unterschiedlichen Verteilgütern.

Die Verteilmaschine kann z. B. eine (insbesondere pneumatische) Sämaschine sein, vorzugsweise zur Drillsaat und/oder zur Einzelkornsaat.

Die unterschiedlichen Verteilgüter können z. B. unterschiedliche Saatgutsorten, Saatgut und Dünger, unterschiedliche Saatgutsorten und Dünger und/oder unterschiedlicher Dünger etc. umfassen. Die landwirtschaftliche Verteilmaschine umfasst einen ersten Vorratsbehälter zur Aufnahme eines ersten Verteilguts (z. B. Saatgut, Dünger etc.) und einen zweiten Vorratsbehälter zur Aufnahme eines zweiten Verteilguts (z. B. Saatgut, Dünger etc.).

Die landwirtschaftliche Verteilmaschine umfasst eine Vielzahl an insbesondere nebeneinander angeordneten Säscharen, z. B. zur wahlweisen Ausgabe des Verteilguts, insbesondere des ersten Verteilguts und des zweiten Verteilguts.

Die landwirtschaftliche Verteilmaschine umfasst eine Steuereinrichtung zum (z. B. mittelbaren oder unmittelbaren) Steuern der Ausgabe des Verteilguts, insbesondere der unterschiedlichen Verteilgüter, z. B. des ersten Verteilguts und des zweiten Verteilguts (und optional eines dritten Verteilguts).

Das Steuern der Ausgabe kann z. B. ein Aktivieren (zweckmäßig ein Starten) einer Ausgabe, ein Deaktivieren (zweckmäßig ein Stoppen) einer Ausgabe und/oder ein mengenmäßiges Verändern einer Ausgabe umfassen.

Die Steuereinrichtung kann z. B. eine Recheneinheit, eine Datenverarbeitungseinheit, einen Controller und/oder einen Job-Rechner umfassen, optional z. B. mit Rechenmodell, Rechenprogramm etc.

Die landwirtschaftliche Verteilmaschine zeichnet sich dadurch aus, dass die Steuereinrichtung ausgebildet ist, um die Ausgabe des Verteilguts zumindest eines ersten Säschares vom ersten Verteilgut auf das zweite Verteilgut und/oder auf kein Verteilgut (insbesondere keine Verteilgutausgabe) oder umgekehrt umzuschalten und/oder die Ausgabe des Verteilguts zumindest eines zweiten Säschares vom zweiten Verteilgut und/oder von keinem Verteilgut (insbesondere keiner Verteilgutausgabe) auf das erste Verteilgut umzuschalten oder umgekehrt.

Das Umschalten kann z. B. variabel, positionsabhängig und/oder fahrtrichtungsabhängig erfolgen.

Dadurch wird ermöglicht, dass trotz einer im Wesentlichen 180°-Wende der landwirtschaftlichen Verteilmaschine ein gewünschtes, gleichmäßiges Verteilgutausgabemuster mit abwechselnder Reihenfolge zwischen unterschiedlichen Verteilgütern fortgesetzt wird.

Es können z. B. mittelsymmetrische Verteilgutausgabemuster (z. B. kann ausgehend von der Mitte der Scharreihe jeweils im gleichen Abstand links und rechts das gleiche Verteilgut z. B. mit gleichen Säscharen ausgebracht werden) und/oder nicht mittelsymmetrische Verteilgutausgabemuster erzeugt werden (z. B. kann ausgehend von der Mitte der Scharreihe jeweils im gleichen Abstand links und rechts unterschiedliches Verteilgut z. B. mit gleichen oder unterschiedlichen Säscharen ausgebracht werden). Optional zusätzlich kann die jeweilige Arbeitstiefe der Säschare und somit die Ablagetiefe des Verteilguts (insbesondere mittels Steuerung durch die Steuereinrichtung) verändert werden.

Es ist möglich, dass das erste Säschar ein äußerstes (z. B. linkes) Säschar ist und das zweite Säschar ein äußerstes (z. B. rechtes) Säschar ist und z. B. ausgebildet sind, um unterschiedliches Verteilgut auszubringen.

Die Steuereinrichtung ist ausgebildet ist, um die Ausgabe des Verteilguts zumindest einiger oder vorzugsweise aller Säschare zwischen dem ersten Säschar und dem zweiten Säschar vom ersten Verteilgut auf das zweite Verteilgut und/oder auf kein Verteilgut (insbesondere keine Verteilgutausgabe) oder umgekehrt umzuschalten und/oder vom zweiten Verteilgut und/oder von keinem Verteilgut (insbesondere keiner Verteilgutausgabe) auf das erste Verteilgut oder umgekehrt umzuschalten.

Es ist möglich, dass die Steuereinrichtung ausgebildet ist, um die Ausgabe des Verteilguts zumindest eines jeden zweiten Säschares oder zumindest eines jeden dritten Säschares vom ersten Verteilgut auf das zweite Verteilgut und/oder auf kein Verteilgut (insbesondere keine Verteilgutausgabe) oder z. B. umgekehrt umzuschalten. Die Zählfolge der Säschare kann z. B. mit dem ersten äußersten Säschar oder dem zweiten äußersten Säschar beginnen.

Es ist z. B. möglich, dass die Steuereinrichtung ausgebildet ist, um die Ausgabe des Verteilguts der Säschare mit gerader Scharnummer vom ersten Verteilgut auf das zweite Verteilgut und/oder auf kein Verteilgut (insbesondere keine Verteilgutausgabe) oder vorzugsweise umgekehrt umzuschalten und/oder die Ausgabe des Verteilguts der Säschare mit ungerader Scharnummer vom zweiten Verteilgut und/oder von keinem Verteilgut (insbesondere keiner Verteilgutausgabe) auf das erste Verteilgut umzuschalten oder vorzugsweise umgekehrt. Die Zählfolge der Säschare kann z. B. mit dem ersten äußersten Säschar oder dem zweiten äußersten Säschar beginnen.

Es ist möglich, dass die Säschare einer ersten Scharreihe zugeordnet sind.

Die landwirtschaftliche Verteilmaschine kann z. B. eine zweite Scharreihe mit einer Vielzahl an Säscharen aufweisen.

Die erste Scharreihe und die zweite Scharreihe können z. B. hintereinander angeordnet sein.

Die Säschare der ersten Scharreihe und die Säschare der zweiten Scharreihe können (z. B. in Längsrichtung der ersten Scharreihe und der zweiten Scharreihe) z. B. versetzt zueinander angeordnet sein, vorzugsweise um einen im Wesentlichen halben Strichabstand.

Es ist möglich, dass die Säschare der ersten Scharreihe und die Säschare der zweiten Scharreihe die gleichen oder unterschiedliche Strichabstände aufweisen und/oder die gleichen oder unterschiedliche Arbeitstiefen aufweisen.

Es ist möglich, dass die landwirtschaftliche Verteilmaschine zumindest zwei, zumindest drei oder zumindest vier unabhängig voneinander betreibbare Zellenrotoren zum z. B. volumetrischen Dosieren des Verteilguts aufweist. Z. B. können zumindest zwei Zellenrotoren für das erste Verteilgut und zumindest ein Zellenrotor für das zweite Verteilgut oder umgekehrt zur Verfügung gestellt werden. Es ist auch möglich, z. B. zumindest zwei Zellenrotoren für das erste Verteilgut und zumindest zwei Zellenrotoren für das zweite Verteilgut zur Verfügung zu stellen.

Es ist möglich, dass die landwirtschaftliche Verteilmaschine zumindest eine erste Zellenradschleuse mit zumindest einem ersten Zellenrotor zum z. B. volumetrischen Dosieren des ersten Verteilguts aufweist, und zumindest eine zweite Zellenradschleuse mit zumindest einem zweiten Zellenrotor zum z. B. volumetrischen Dosieren des zweiten Verteilguts aufweist.

Der zumindest eine erste Zellenrotor und der zumindest eine zweite Zellenrotor können vorzugsweise unabhängig voneinander betrieben werden.

Es ist möglich, dass die landwirtschaftliche Verteilmaschine zumindest eine erste Zellenradschleuse mit zumindest zwei unabhängig voneinander betreibbaren ersten Zellenrotoren zum z. B. volumetrischen Dosieren des ersten Verteilguts aufweist, und/oder zumindest eine oder zumindest zwei zweite Zellenradschleusen mit zumindest zwei unabhängig voneinander betreibbaren zweiten Zellenrotoren zum z. B. volumetrischen Dosieren des zweiten Verteilguts aufweist.

Die zumindest zwei ersten Zellenrotoren und die zumindest zwei zweiten Zellenrotoren können vorzugsweise unabhängig voneinander betrieben werden.

Die zumindest zwei ersten Zellenrotoren können z. B. in einem gemeinsamen Dosiergehäuse untergebracht sein und/oder im Wesentlichen koaxial zueinander angeordnet sein. Alternativ oder ergänzend können die zumindest zwei zweiten Zellenrotoren in einem gemeinsamen Dosiergehäuse untergebracht sein und/oder im Wesentlichen koaxial zueinander angeordnet sein.

Es ist möglich, dass zumindest zwei Zellenrotoren in Reihe geschaltet sind und/oder zumindest zwei Zellenrotoren parallel geschaltet sind.

Es ist auch möglich, dass mehrere Dosiergeräte (insbesondere Zellenradschleusen) mit jeweils nur einem Zellenrotor zum z. B. volumetrischen Dosieren des Verteilguts vorgesehen sind und die einzelnen Zellenrotoren der Dosiergeräte vorzugsweise unabhängig voneinander betreibbar sind.

Die erste Zellenradschleuse kann z. B. zumindest zwei Steuerelemente, vorzugsweise Steuerklappen (z. B. Halbseitenklappen), zum wahlweisen Verteilen des ersten Verteilguts zwischen zumindest zwei Verteilgut-Auslässen aufweisen. Alternativ oder ergänzend kann die zweite Zellenradschleuse z. B. zumindest zwei Steuerelemente, vorzugsweise Steuerklappen (z. B. Halbseitenklappen), zum wahlweisen Verteilen des zweiten Verteilguts zwischen zumindest zwei Verteilgut-Auslässen aufweisen. Die Verteilgut-Auslässe führen vorzugsweise in ein pneumatisches Verteilgut-Fördersystem zum Förderluft-unterstützten Transport des (zweckmäßig ersten und/oder zweiten) Verteilguts, vorzugsweise zu zumindest einem Verteilturm und von dem zumindest einen Verteilturm zu der Vielzahl an Säscharen.

Die erste Zellenradschleuse weist vorzugsweise eine Fallschleuse auf, in der die zumindest zwei Steuerelemente der ersten Zellenradschleuse angeordnet sein können.

Die zweite Zellenradschleuse weist vorzugsweise eine Fallschleuse auf, in der die zumindest zwei Steuerelemente der zweiten Zellenradschleuse angeordnet sein können.

Die landwirtschaftliche Verteilmaschine weist einen (zweckmäßig einen oberen oder unteren Verteilkopf umfassenden) ersten Verteilturm auf zum wahlweisen Verteilen des ersten Verteilguts und des zweiten Verteilguts.

Die landwirtschaftliche Verteilmaschine einen (zweckmäßig einen oberen oder unteren Verteilkopf umfassenden) zweiten Verteilturm auf zum wahlweisen Verteilen des ersten Verteilguts und/oder des zweiten Verteilguts.

Der erste Verteilturm kann vorzugsweise zur Verteilgutversorgung mit z. B. zumindest zwei oder zumindest drei unabhängig voneinander betreibbaren Zellenrotoren in Verbindung gebracht werden (z. B. mittels Steuerung durch die Steuereinrichtung), wobei auch Ausführungsformen möglich sind, bei denen der erste Verteilturm zur Verteilgutversorgung z. B. an nur einen Zellenrotor angeschlossen sein kann.

Der optionale zweite Verteilturm kann vorzugsweise zur Verteilgutversorgung mit z. B. zumindest einer, zumindest zwei oder zumindest drei unabhängig voneinander betreibbaren Zellenrotoren in Verbindung gebracht werden (z. B. mittels Steuerung durch die Steuereinrichtung), wobei auch Ausführungsformen möglich sind, bei denen der zweite Verteilturm zur Verteilgutversorgung z. B. an nur einen Zellenrotor angeschlossen sein kann.

Mehrere der Säschare können z. B. ausgebildet sein, um gemeinsam und somit z. B. im Wesentlichen synchron das erste Verteilgut und das zweite Verteilgut auszugeben.

Mehrere der Säschare können z. B. zur Verteilgutversorgung (vorzugsweise mit unterschiedlichen Verteilgütern) mit dem ersten Verteilturm und dem zweiten Verteilturm verbunden sein.

Die Steuereinrichtung kann z. B. ausgebildet sein, um das insbesondere selektive Umschalten in Abhängigkeit vorbestimmter Parameter vorzugsweise automatisch durchzuführen.

Die Parameter können z. B. zumindest eines von folgendem umfassen: flächenspezifische Feldkonturen oder flächenspezifische Feldeigenschaften, Art und/oder Beschaffenheit der unterschiedlichen Verteilgüter, prozessspezifische Anforderungen, insbesondere durch nachfolgende Feldarbeiten erforderliche Fahrspuren, und/oder Ortskoordinaten eines Positionsbestimmungssystems.

Es ist möglich, dass die Steuereinrichtung ausgebildet ist, um das vorzugsweise selektive Umschalten in Abhängigkeit einer Fahrtrichtung (insbesondere einer Fahrtrichtungsänderung) der landwirtschaftlichen Verteilmaschine und/oder positionsabhängig (insbesondere mittels Ortskoordinaten eines Positionsbestimmungssystems (z. B. GPS)) auszuführen.

Eine Vorrangschaltung kann z. B. zur Verfügung gestellt sein, um das vorzugsweise selektive Umschalten zu übersteuern, wobei die Vorrangschaltung z. B. eine Fahrgassenschaltung umfassen kann.

Die Vorrangschaltung kann z. B. zum Anlegen von Fahrgassen die Ausgabe des ersten Verteilguts und/oder des zweiten Verteilguts reduzieren oder deaktivieren.

Eine Eingabeeinrichtung (z. B. eine Bedieneinrichtung, ein Bedientableau, eine Anzeigevorrichtung, ein TouchScreen, eine Tastatur, ein Eingabefeld, eine App, eine Schnittstelle (z. B. eine Benutzerschnittstelle, eine digitale Schnittstelle und/oder eine Datenschnittstelle) und/oder ein mobiles Endgerät)) kann z. B. zur Verfügung gestellt sein, mittels der ein Ausführungsplan an die Steuereinrichtung übermittelbar ist, wobei der Ausführungsplan das vorzugsweise selektive Umschalten definieren kann, insbesondere um ein zweckmäßig gewünschtes Verteilgutausgabemuster zu erzielen und/oder z. B. nach einer Fahrtrichtungs- oder Positionsänderung fortsetzen zu können.

Die Eingabeeinrichtung kann z. B. zur manuellen Eingabe des Ausführungsplans durch eine Bedienperson ausgebildet sein und/oder eine Schnittstelle zur Übermittlung des Ausführungsplans in Form eines Datenpakets umfassen.

Es ist möglich, dass die Steuereinrichtung z. B. ausgebildet ist, um vorzugsweise verteilgutabhängig eine Arbeitstiefe (vorzugsweise inklusive einem Abheben vom Boden und somit z. B. einem deaktivieren einer Bodenbearbeitung) und/oder einen Schardruck mehrerer Säschare zweckmäßig veränderbar zu steuern. Alternativ oder ergänzend kann die Steuereinrichtung z. B. ausgebildet sein, um Strichabstände mehrerer Säschare zweckmäßig veränderbar zu steuern, z. B. indem die Ausgabe von Verteilgut aus bestimmten Säscharen deaktiviert oder aktiviert werden kann.

Die Steuerungseinrichtung ist ausgebildet, um für eine Anschlussfahrt, für eine Fahrtrichtungsänderung, für eine Positionsänderung und/oder eine im Wesentlichen 180°-Wende der landwirtschaftlichen Verteilmaschine das Umschalten auszuführen, dass ein gleichmäßiges Verteilgutausgabemuster mit abwechselnder Reihenfolge zwischen unterschiedlichen Verteilgütern fortgesetzt wird.

Die Steuereinrichtung ist ausgebildet, um zum Umschalten zumindest eines von folgendem anzusteuern:
- zumindest einen einer Vielzahl an unabhängig voneinander betreibbaren Zellenrotoren zum insbesondere volumetrischen Dosieren des Verteilguts,
- zumindest ein Steuerelement (vorzugsweise Steuerklappe, z. B. Halbseitenklappe) zumindest einer Zellenradschleuse, wobei das zumindest eine Steuerelement zum wahlweisen Verteilen des Verteilguts zwischen zumindest zwei (insbesondere zumindest drei) Verteilgut-Auslässen ausgebildet ist, und/oder
- zumindest ein Steuerorgan (z. B. ein Ventil, eine Klappe und/oder eine Weiche) im pneumatischen Verteilgut-Fördersystem zum Transportieren von dosiertem Verteilgut zu den Säscharen. Die Steuerorgane können z. B. Teil des ersten Verteilturms und/oder Teil des zweiten Verteilturms und/oder zweckmäßig Teil der Säschare sein.

Eine Umschaltung kann z. B. dadurch erfolgen, dass die zumindest zwei Verteiltürme z. B. in Abhängigkeit der Fahrtrichtung mit unterschiedlichen Verteilgütern versorgt werden, wobei hierfür entweder die Zellenrotoren unterschiedlich angesteuert werden können und/oder die Steuerelemente (z. B. die Steuerklappen, insbesondere Halbseitenklappen) jeweils in die entsprechenden Schaltstellungen gebracht werden können. Gemäß einer alternativen oder ergänzenden Ausführungsform ist es möglich, dass an zumindest einem Verteilerturm jeweils Abgänge (z. B. Ventil, Klappen und/oder Weichen) geschalten werden können.

Es ist möglich, dass die landwirtschaftliche Verteilmaschine einen dritten Vorratsbehälter zur Aufnahme eines dritten Verteilguts (z. B. Saatgut, Dünger etc.) aufweist, und/oder einen dritten Verteilturm zum Verteilen des Verteilguts an mehrere Säschare aufweist.

Es ist möglich, dass die Steuereinrichtung z. B. ausgebildet ist, um die Ausgabe des Verteilguts zumindest des ersten Säschares (insbesondere der Säschare der landwirtschaftlichen Verteilmaschine) zwischen zumindest drei unterschiedlichen Verteilgütern umzuschalten und/oder die Ausgabe des Verteilguts zumindest des zweiten Säschares (insbesondere der Säschare der landwirtschaftlichen Verteilmaschine) zwischen zumindest drei unterschiedlichen Verteilgütern umzuschalten.

Im Kontext der Erfindung kann das Verteilgut das erste Verteilgut, das zweite Verteilgut und/oder z. B. das dritte Verteilgut umfassen.

Bei dem ersten Verteilgut, dem zweiten Verteilgut und/oder dem dritten Verteilgut kann es sich insbesondere um unterschiedliche Verteilgüter handeln (z. B. unterschiedliche Saatgutsorten oder z. B. Saatgut und Dünger oder unterschiedliche Saatgutsorten und Dünger etc.).

Die Säschare können z. B. Scheibensäschare (z.B. Einscheibenschare oder Doppelscheibenschare), Zinkenschare, Schleppschare und/oder Meißelschare umfassen.

Es ist möglich, dass das Umschalten und somit das selektive Verteilen insbesondere positionsabhängig und/oder fahrtrichtungsabhängig erfolgt, z. B. so, dass trotz Positionsveränderung und/oder trotz Fahrtrichtungsänderung der landwirtschaftlichen Verteilmaschine das Umschalten dafür sorgen kann, dass die unterschiedlichen Verteilgüter an der gewünschten Position ausgebracht werden können und somit vorteilhaft ein gewünschtes Verteilgutausgabemuster erzielt und insbesondere fortgesetzt werden kann.

Die Steuereinrichtung ist vorzugsweise ausgebildet, um das selektive Umschalten zu veranlassen, z. B. durch Ansteuern von Zellenrotoren, Steuerelementen (z. B. Steuerklappen, insbesondere Halbseitenklappen) und/oder anderen geeigneten Steuerorganen (z. B. an oder in einem oder mehreren Verteiltürmen, an den Säscharen und/oder anderen geeigneten Positionen insbesondere im pneumatischen Verteilgut-Fördersystem zum Transportieren der unterschiedlichen Verteilgüter).

Das selektive Umschalten ermöglicht z. B., dass wahlweise das erste Verteilgut (z. B. Saatgut) in die Saatgutreihen ausgebracht werden kann und das zweite Verteilgut (z. B. Dünger) neben die Saatgutreihen ausgebracht werden kann (z. B. Betriebsmodus A) oder das erste Verteilgut (z. B. Saatgut) in die Saatgutreihen ausgebracht werden kann und das zweite Verteilgut (z. B. Dünger) ebenfalls (zweckmäßig direkt) in die Saatgutreihen ausgebracht werden kann (z. B. Betriebsmodus B).

Das Dosieren der Zellenradschleusen und/oder der Zellenrotoren ist vorzugsweise ein volumetrisches Dosieren.

Die Erfindung betrifft auch ein Verfahren, gemäß Anspruch 24, zum Steuern einer vorzugsweise wie hierin offenbarten landwirtschaftliche Verteilmaschine.

Die landwirtschaftliche Verteilmaschine dient zum Verteilen unterschiedlicher Verteilgüter und vorzugsweise zum selektiven Umschalten einer Ausgabe zwischen den unterschiedlichen Verteilgütern.

Die landwirtschaftliche Verteilmaschine umfasst einen ersten Vorratsbehälter zur Aufnahme eines ersten Verteilguts, einen zweiten Vorratsbehälter zur Aufnahme eines zweiten Verteilguts, eine Vielzahl an nebeneinander angeordneten Säscharen, und eine Steuereinrichtung zum (vorzugsweise mittelbaren oder unmittelbaren) Steuern der Ausgabe des Verteilguts (zweckmäßig der unterschiedlichen Verteilgüter, z. B. des ersten Verteilguts, des zweiten Verteilguts und/oder des dritten Verteilguts).

Die Säschare dienen insbesondere zur z. B. wahlweisen Ausgabe des Verteilguts (zweckmäßig des ersten Verteilguts, des zweiten Verteilguts und/oder des dritten Verteilguts).

Das Verfahren zeichnet sich dadurch aus, dass die Steuereinrichtung die Ausgabe des Verteilguts zumindest eines ersten Säschares vom ersten Verteilgut auf das zweite Verteilgut und/oder auf kein Verteilgut (insbesondere keine Verteilgutausgabe) oder umgekehrt umschaltet und/oder die Ausgabe des Verteilguts zumindest eines zweiten Säschares vom zweiten Verteilgut und/oder von keinem Verteilgut (insbesondere keiner Verteilgutausgabe) auf das erste Verteilgut umschaltet oder umgekehrt.

Die Offenbarung zur landwirtschaftlichen Verteilmaschine gilt zweckmäßig ebenso für das Verfahren.

Die Vorratsbehälter können z. B. separate Vorratsbehälter sein oder z. B. in einer einzigen Bevorratungsvorrichtung (z. B. einem Doppel- oder Mehrfachtank) ausgebildet sein.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Figur 1: zeigt eine landwirtschaftliche Verteilmaschine gemäß einer Ausführungsform der Erfindung,
- Figur 2: zeigt einen vergrößerten Teilbereich der landwirtschaftlichen Verteilmaschine der Figur 1,
- Figur 3: zeigt eine Fahrtrichtungsänderung/Positionsveränderung der landwirtschaftlichen Verteilmaschine der Figur 1, insbesondere eine 180°-Wende,
- Figur 4: zeigt eine landwirtschaftliche Verteilmaschine gemäß einer anderen Ausführungsform der Erfindung,
- Figur 5: zeigt einen vergrößerten Teilbereich der landwirtschaftlichen Verteilmaschine der Figur 4,
- Figur 6: zeigt eine landwirtschaftliche Verteilmaschine gemäß einer anderen Ausführungsform der Erfindung,
- Figur 7: zeigt eine Schnittansicht einer Zellenradschleuse für eine landwirtschaftliche Verteilmaschine gemäß einer Ausführungsform der Erfindung, in einer ersten Klappenstellung,
- Figur 8: zeigt eine Schnittansicht einer Zellenradschleuse für eine landwirtschaftliche Verteilmaschine gemäß einer Ausführungsform der Erfindung, in einer zweiten Klappenstellung,
- Figur 9: zeigt eine Schnittansicht einer Zellenradschleuse für eine landwirtschaftliche Verteilmaschine gemäß einer Ausführungsform der Erfindung, in einer dritten Klappenstellung,
- Figur 10: zeigt eine Schnittansicht einer Zellenradschleuse für eine landwirtschaftliche Verteilmaschine gemäß einer anderen Ausführungsform der Erfindung,
- Figur 11: zeigt eine schematische Darstellung eines durch eine landwirtschaftliche Verteilmaschine gemäß einer Ausführungsform der Erfindung erzeugten Verteilgutausgabemusters mit drei unterschiedliche Verteilgütern, und
- Figur 12: zeigt eine schematische Darstellung eines Verteilgutausgabemusters mit zwei unterschiedlichen Verteilgütern und einer 360°-Wende einer landwirtschaftlichen Verteilmaschine zur Fortsetzung des Verteilgutausgabemusters gemäß Stand der Technik.

Die in den Figuren beschriebenen Ausführungsformen stimmen teilweise überein, wobei für ähnliche oder identische Teile die gleichen Bezugszeichen verwendet werden und zu deren Erläuterung auch auf die Beschreibung der anderen Ausführungsformen verwiesen werden kann.

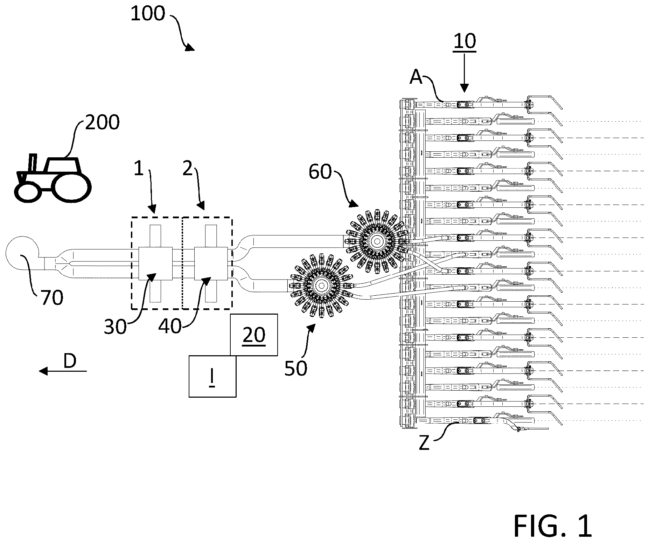

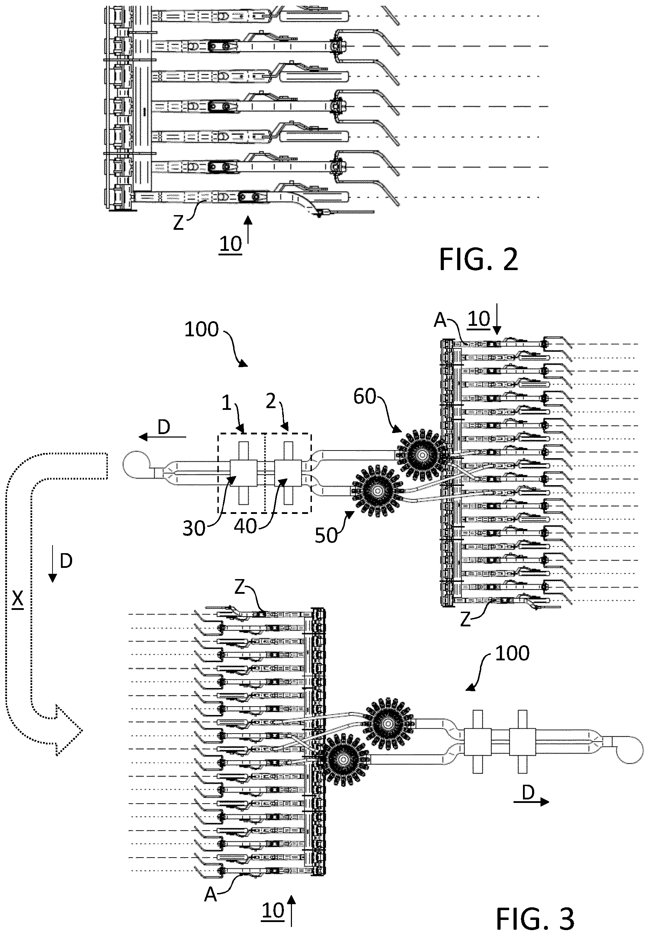

Figur 1 zeigt eine landwirtschaftliche Verteilmaschine 100 zum Verteilen unterschiedlicher insbesondere granulatartiger Verteilgüter und vorzugsweise zum selektiven Umschalten einer Ausgabe zwischen den unterschiedlichen Verteilgütern, wobei Figur 2 einen vergrößerten Teilbereich der landwirtschaftlichen Verteilmaschine 100 zeigt.

Die landwirtschaftliche Verteilmaschine 100 umfasst einen ersten Vorratsbehälter 1 zur Aufnahme eines ersten Verteilguts (z. B. Saatgut, Dünger etc.), einen zweiten Vorratsbehälter 2 zur Aufnahme eines zweiten Verteilguts (z. B. Saatgut, Dünger etc.) und eine Vielzahl an nebeneinander angeordneten Säscharen A, 10, Z zur wahlweisen Ausgabe des ersten Verteilguts und des zweiten Verteilguts.

Das erste Verteilgut und das zweite Verteilgut sind unterschiedliche Verteilgüter, z. B. unterschiedliche Saatgutsorten oder Saatgut einerseits und Dünger andererseits.

Die landwirtschaftliche Verteilmaschine 100 umfasst beispielhaft zwanzig Säschare A, 10, Z, wobei Bezugseichen A ein erstes äußerstes Säschar und Bezugszeichen Z ein zweites äußerstes Säschar bildet.

Eine Steuereinrichtung 20 dient zum Steuern der Ausgabe der unterschiedlichen Verteilgüter.

Die ausgebrachten unterschiedlichen Verteilgüter sind schematisch durch gestrichelte Linien für das erste Verteilgut und gepunktete Linien für das zweite Verteilgut schematisch dargestellt. Sie bilden ein insbesondere gleichmäßiges Verteilgutausgabemuster mit abwechselnder Reihenfolge zwischen erstem Verteilgut und zweitem Verteilgut.

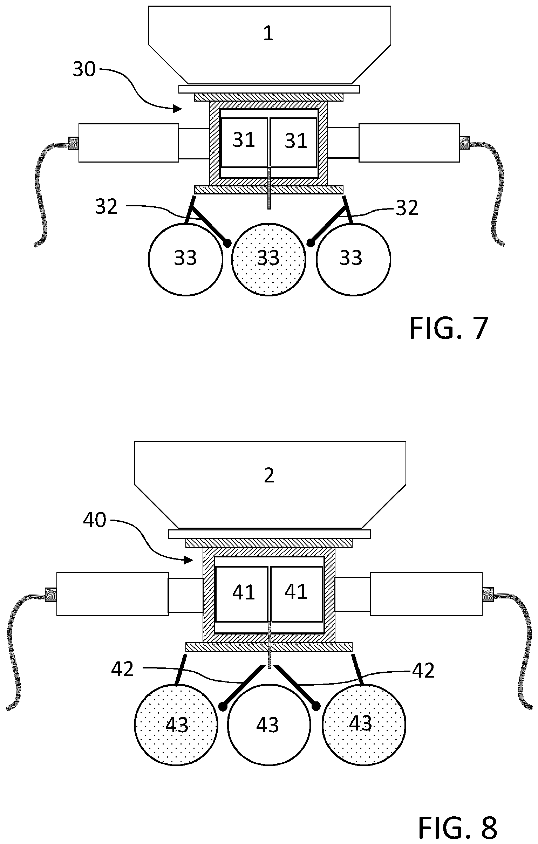

Eine als Zellenradschleuse 30 ausgebildete erste Dosiereinrichtung dient zum insbesondere volumetrischen Dosieren des ersten Verteilguts, wobei eine als Zellenradschleuse 40 ausgebildete zweite Dosiereinrichtung zum insbesondere volumetrischen Dosieren des zweiten Verteilguts dient. Die Zellenradschleusen 30 und 40 können z. B. wie unter Bezugnahme auf die Figuren 7 bis 10 beschrieben ausgeführt sein.

So kann z. B. die Zellenradschleuse 30 zwei unabhängig voneinander betreibbare Zellenrotoren 31 umfassen. Die Zellenrotoren 31 können z. B. durch jeweils einen eigenen Antriebsmotor (Dosiermotor) angetrieben werden. Ebenso kann die Zellenradschleuse 40 zwei unabhängig voneinander betreibbare Zellenrotoren 41 umfassen. Die Zellenrotoren 41 können ebenfalls z. B. durch jeweils einen eigenen Antriebsmotor (Dosiermotor) angetrieben werden.

Die landwirtschaftliche Verteilmaschine 100 umfasst einen ersten Verteilturm 50 mit vorzugsweise oberem Verteilkopf und einen zweiten Verteilturm 60 mit vorzugsweise oberem Verteilkopf, mittels derer das dosierte erste Verteilgut und das dosierte zweite Verteilgut den Säscharen A, 10, Z zugeführt werden kann.

In der beispielhaften Ausführungsform ist der erste Verteilturm 50 zur Verteilgutversorgung mit allen zwanzig Säscharen A, 10, Z verbunden und ebenso ist der zweite Verteilturm 60 zur Verteilgutversorgung mit allen zwanzig Säscharen A, 10, Z verbunden.

Ein pneumatisches Verteilgut-Fördersystem dient zum Förderluft-unterstützten Transport des dosierten ersten Verteilguts und des dosierten zweiten Verteilguts über den ersten Verteilturm 50 und/oder über den zweiten Verteilturm 60 zu den Säscharen A, 10, Z. Die Förderluft kann durch eine oder mehrere Strömungserzeugungseinrichtungen 70 (z. B. Gebläse) erzeugt werden.

Ein Antriebsfahrzeug 200 (z. B. ein Träger- und/oder Zugfahrzeug, z. B. ein Traktor oder dergleichen) dient zum Fortbewegen der landwirtschaftlichen Verteilmaschine 100.

Bezugszeichen D kennzeichnet die Vorwärtsfahrtrichtung, insbesondere die Zugrichtung, des Antriebsfahrzeugs 200 und somit der landwirtschaftlichen Verteilmaschine 100.

Die Steuereinrichtung 20 ist ausgebildet, um die Ausgabe des Verteilguts aus den Säscharen A, 10, Z zwischen den unterschiedlichen Verteilgütern umzuschalten, vorzugsweise inklusive eines Umschaltens auf keine Verteilgutausgabe und/oder inklusive eines Umschaltens von keiner Verteilgutausgabe zu einer Ausgabe des ersten Verteilguts und/oder des zweiten Verteilguts.

Die Steuereinrichtung 20 ermöglicht insbesondere, dass z. B. die Ausgabe des Verteilguts des ersten Säschares A vom ersten Verteilgut auf das zweite Verteilgut und/oder auf keine Verteilgutausgabe (oder zweckmäßig umgekehrt) umgeschaltet wird und z. B. die Ausgabe des Verteilguts des zweiten Säschares Z vom zweiten Verteilgut und/oder von keiner Verteilgutausgabe auf das erste Verteilgut umgeschaltet wird (oder zweckmäßig umgekehrt).

Die Steuereinrichtung 20 kann z. B. ein selektives Umschalten veranlassen, so dass die Ausgabe des Verteilguts zumindest eines jeden zweiten Säschares A, 10, Z oder zumindest eines jeden dritten Säschares A, 10, Z vom ersten Verteilgut auf das zweite Verteilgut und/oder auf kein Verteilgut (insbesondere keine Verteilgutausgabe) oder z. B. umgekehrt umgeschaltet wird. Die Zählfolge der Säschare A, 10, Z kann mit z. B. einem der zwei äußersten Säschare A, Z beginnen.

Die Steuereinrichtung 20 kann z. B. ein selektives Umschalten veranlassen, so dass die Ausgabe des Verteilguts der Säschare A, 10, Z mit gerader Scharnummer vom ersten Verteilgut auf das zweite Verteilgut und/oder auf kein Verteilgut (insbesondere keine Verteilgutausgabe) oder vorzugsweise umgekehrt umgeschaltet wird und/oder die Ausgabe des Verteilguts der Säschare A, 10, Z mit ungerader Scharnummer vom zweiten Verteilgut und/oder von keinem Verteilgut (insbesondere keiner Verteilgutausgabe) auf das erste Verteilgut umgeschaltet wird oder vorzugsweise umgekehrt. Die Zählfolge der Säschare A, 10, Z kann mit z. B. einem der zwei äußersten Säschare A, Z beginnen.

Es kann z. B. eine Eingabeeinrichtung I zur Verfügung gestellt werden, mittels der ein Ausführungsplan zur Realisierung eines Verteilgutausgabemusters an die Steuereinrichtung 20 übermittelbar ist, wobei der Ausführungsplan das selektive Umschalten definiert, um das gewünschte Verteilgutausgabemuster zu erzeugen.

Die Eingabeeinrichtung I kann z. B. zur manuellen Eingabe des Ausführungsplans durch eine Bedienperson ausgebildet sein (z. B. über ein TouchScreen) und/oder eine Schnittstelle zur Übermittlung des Ausführungsplans in Form eines Datenpakets umfassen.

Figur 3 zeigt eine Fahrtrichtungs- und/oder Positionsänderung der landwirtschaftlichen Verteilmaschine 100, insbesondere eine 180°-Wende X.

Figur 3 oben zeigt, dass die landwirtschaftliche Verteilmaschine 100 ein insbesondere gleichmäßiges Verteilgutausgabemuster mit abwechselnder Reihenfolge zwischen erstem Verteilgut und zweitem Verteilgut erzeugen kann.

Um das Verteilgutausgabemuster mit abwechselnder Reihenfolge zwischen erstem Verteilgut und zweitem Verteilgut trotz 180°-Wende der landwirtschaftlichen Verteilmaschine 100 fortsetzen zu können, ist die Steuereinrichtung 20 ausgebildet, die Ausgabe des Verteilguts der Säschare A, 10, Z vom ersten Verteilgut auf das zweite Verteilgut und die Ausgabe des Verteilguts vom zweiten Verteilgut auf das erste Verteilgut umzuschalten. Durch das Umschalten ist eine wie z. B in Figur 12 gezeigte ineffiziente 360°-Wende nicht erforderlich.

Durch das Umschalten können z. B. mittelsymmetrische Verteilgutausgabemuster (z. B. ausgehend von der Mitte der Scharreihe kann jeweils im gleichen Abstand links und rechts das gleiche Verteilgut z. B. mit gleichen Säscharen ausgebracht werden) erzeugt und vorzugsweise fortgesetzt werden (z. B. trotz im Wesentlichen 180°-Wende X).

Durch das Umschalten können z. B. nicht mittelsymmetrische Verteilgutausgabemuster (z. B. ausgehend von der Mitte der Scharreihe kann jeweils im gleichen Abstand links und rechts unterschiedliches Verteilgut z. B. mit gleichen oder unterschiedlichen Säscharen ausgebracht) erzeugt und vorzugsweise fortgesetzt werden (z. B. trotz im Wesentlichen 180°-Wende X).

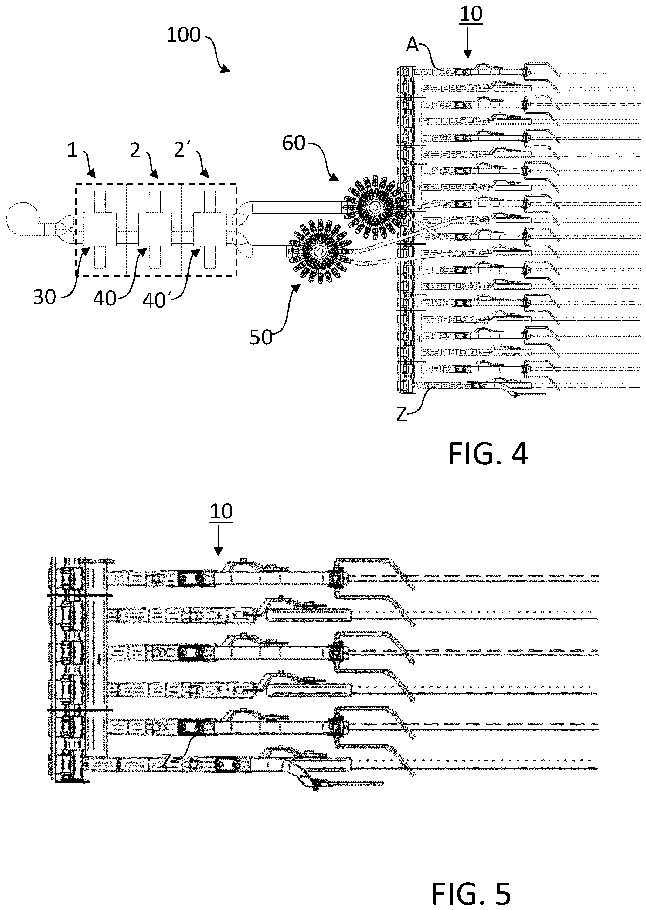

Figur 4 zeigt eine landwirtschaftliche Verteilmaschine 100 gemäß einer anderen Ausführungsform der Erfindung, wobei Figur 5 einen vergrößerten Teilbereich der landwirtschaftlichen Verteilmaschine 100 zeigt.

Die landwirtschaftliche Verteilmaschine 100 umfasst drei Vorratsbehälter für unterschiedliche Verteilgüter, nämlich einen Vorratsbehälter 1 für ein erstes Verteilgut, einen Vorratsbehälter 2 für ein zweites Verteilgut, und einen Vorratsbehälter 2' für ein drittes Verteilgut.

Die landwirtschaftliche Verteilmaschine 100 umfasst drei Zellenradschleusen, nämlich eine erste Zellenradschleuse 30 für das erste Verteilgut, eine zweite Zellenradschleuse 40 für das zweite Verteilgut und eine dritte Zellenradschleuse 40' für das dritte Verteilgut.

Die einzelnen Säschare A, 10, Z sind ausgebildet, um in abwechselnder Reihenfolge einerseits gemeinsam das erste Verteilgut und das zweite Verteilgut und andererseits gemeinsam das dritte Verteilgut und das zweite Verteilgut ausbringen zu können.

Die ausgebrachten unterschiedlichen Verteilgüter sind schematisch durch gestrichelte Linien für das erste Verteilgut, durchgezogene Linien für das zweite Verteilgut und gepunktete Linien für das dritte Verteilgut dargestellt. Sie bilden ein insbesondere gleichmäßiges Verteilgutausgabemuster mit abwechselnder Reihenfolge zwischen gemeinsam ausgebrachtem erstem Verteilgut und zweitem Verteilgut und gemeinsam ausgebrachtem drittem Verteilgut und zweitem Verteilgut.

Um das Verteilgutausgabemuster z. B. trotz einer im Wesentlichen 180°-Wende der landwirtschaftlichen Verteilmaschine 100 (vergleiche z. B. Figur 3) fortsetzen zu können, ist die Steuereinrichtung 20 ausgebildet, die gemeinsame Ausgabe vom ersten Verteilgut und zweiten Verteilgut auf die gemeinsame Ausgabe von zweitem Verteilgut und drittem Verteilgut umzuschalten und die gemeinsame Ausgabe von drittem Verteilgut und zweiten Verteilgut auf die gemeinsame Ausgabe von zweitem Verteilgut und erstem Verteilgut umzuschalten.

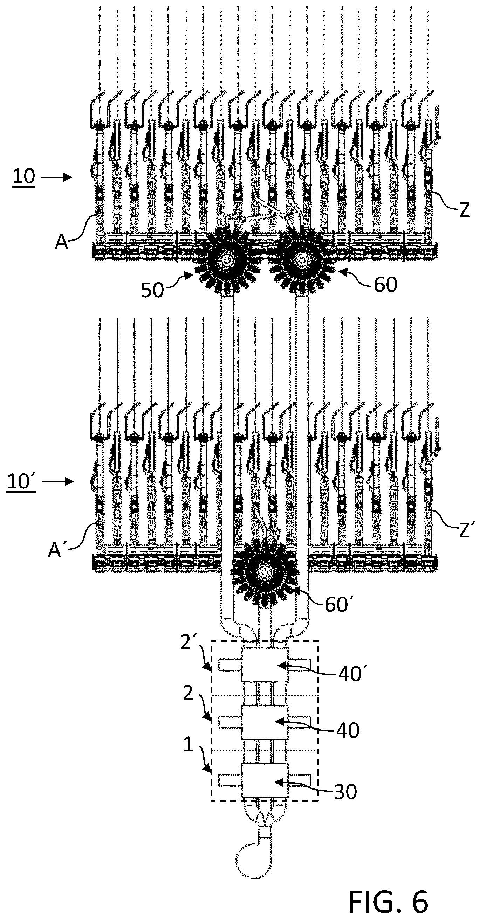

Figur 6 zeigt eine landwirtschaftliche Verteilmaschine 100 gemäß einer anderen Ausführungsform der Erfindung, mit drei Vorratsbehältern 1, 2, 2' für unterschiedliche Verteilgüter, nämlich einen Vorratsbehälter 1 für ein erstes Verteilgut, einen Vorratsbehälter 2 für ein zweites Verteilgut, und einen Vorratsbehälter 2' für ein drittes Verteilgut.

Drei Zellenradschleusen 30, 40, 40' zum Dosieren der unterschiedlichen Verteilgüter und drei Verteiltürme 50, 60, 60' zum Verteilen der dosierten unterschiedlichen Verteilgüter an die Säschare A, 10, Z sind zur Verfügung gestellt.

Die landwirtschaftliche Verteilmaschine 100 umfasst insbesondere zwei Scharreihen, nämlich eine erste Scharreihe mit einer Vielzahl an Säscharen A, 10, Z und eine zweite Scharreihe mit einer Vielzahl an Säscharen A', 10', Z1'. Die erste Scharreihe und die zweite Scharreihe sind hintereinander angeordnet, so dass die Säschare A, 10, Z der ersten Scharreihe und die Säschare A', 10', Z1' der zweiten Scharreihe in Längsrichtung der ersten Scharreihe und der zweiten Scharreihe versetzt zueinander angeordnet sind, z. B. um einen im Wesentlichen halben Strichabstand.

Aus den Figuren 1 bis 6 ergibt sich, dass das selektive Umschalten auch z. B. unterschiedliche Betriebsmodi ermöglicht. So kann z. B. wahlweise das erste Verteilgut (z. B. Saatgut) in die Saatgutreihen ausgebracht werden und das zweite Verteilgut (z. B. Dünger) neben die Saatgutreihen ausgebracht werden (Betriebsmodus A) oder das erste Verteilgut (z. B. Saatgut) in die Saatgutreihen ausgebracht werden und das zweite Verteilgut (z. B. Dünger) ebenfalls (zweckmäßig direkt) in die Saatgutreihen ausgebracht werden (Betriebsmodus B).

Figur 7 zeigt eine Schnittansicht einer Zellenradschleuse 30 für eine landwirtschaftliche Verteilmaschine 100 in einer ersten Klappenstellung.

Die Zellenradschleuse 30 dient zum volumetrischen Dosieren des insbesondere ersten Verteilguts aus dem ersten Vorratsbehälter 1. Sie umfasst zwei unabhängig voneinander betreibbare Zellenrotoren 31, die im Wesentlichen koaxial zueinander angeordnet sind und in einem gemeinsamen Dosiergehäuse untergebracht sind. Die Zellenrotoren 31 können z. B. über jeweils einen eigenen Dosiermotor angetrieben werden.

Die Zellenradschleuse 30 umfasst zwei Steuerelemente 32, vorzugsweise zwei Steuerklappen 32, zum wahlweisen Verteilen des ersten Verteilguts zwischen drei Verteilgut-Auslässen 33 für das pneumatische Verteilgut-Fördersystem.

Die in Figur 7 gezeigte Klappenstellung ("mittig") erzeugt eine Verteilung des Verteilguts zum mittigen Verteilgut-Auslass 33 und insbesondere eine Ausgabe des Verteilguts im Düngerhorizont.

Figur 8 zeigt eine Schnittansicht einer Zellenradschleuse 40 für die landwirtschaftliche Verteilmaschine 100 in einer zweiten Klappenstellung.

Die Zellenradschleuse 40 dient zum volumetrischen Dosieren des insbesondere zweiten Verteilguts aus dem zweiten Vorratsbehälter 2. Sie umfasst zwei unabhängig voneinander betreibbare Zellenrotoren 41, die im Wesentlichen koaxial zueinander angeordnet sind und in einem gemeinsamen Dosiergehäuse untergebracht sind. Die Zellenrotoren 41 können z. B. über jeweils einen eigenen Dosiermotor angetrieben werden.

Die Zellenradschleuse 40 umfasst zwei Steuerelemente 42, vorzugsweise zwei Steuerklappen 42, zum wahlweisen Verteilen des zweiten Verteilguts zwischen drei Verteilgut-Auslässen 43 für das pneumatische Verteilgut-Fördersystem.

Die in Figur 8 gezeigte Klappenstellung ("außen") erzeugt eine Ausgabe des Verteilguts zum linken Verteilgut-auslass 43 und zum rechten Verteilgut-Auslass 43, wobei dem mittigen Verteilgut-Auslass 43 kein Verteilgut zugeteilt wird.

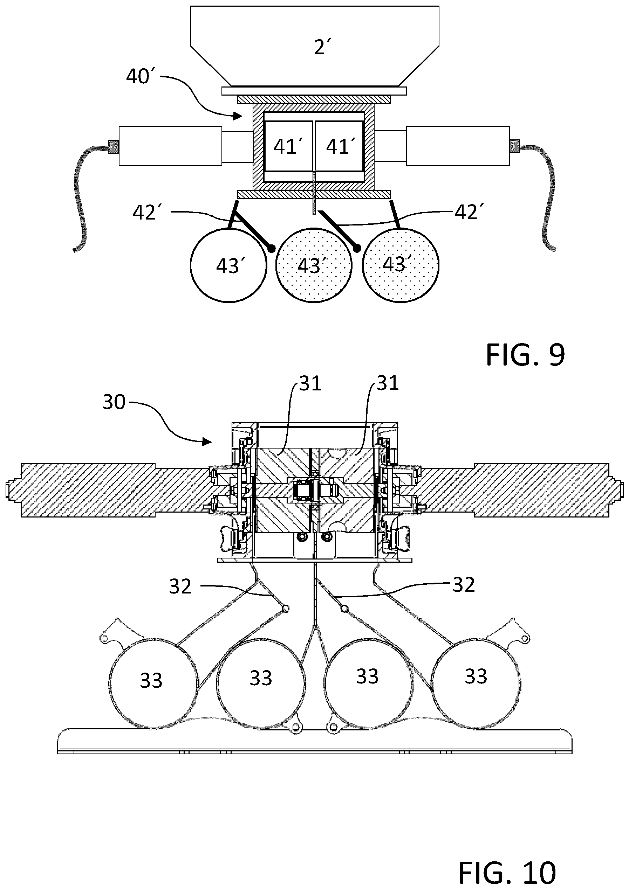

Figur 9 zeigt eine Schnittansicht einer Zellenradschleuse 40' für die landwirtschaftliche Verteilmaschine 100 in einer dritten Klappenstellung.

Die Zellenradschleuse 40' dient zum volumetrischen Dosieren des insbesondere dritten Verteilguts aus dem dritten Vorratsbehälter 2'. Sie umfasst zwei unabhängig voneinander betreibbare Zellenrotoren 41', die im Wesentlichen koaxial zueinander angeordnet sind und in einem gemeinsamen Dosiergehäuse untergebracht sind. Die Zellenrotoren 41' können z. B. über jeweils einen eigenen Dosiermotor angetrieben werden.

Die Zellenradschleuse 40' umfasst zwei Steuerelemente 42', vorzugsweise zwei Steuerklappen 42', zum wahlweisen Verteilen des dritten Verteilguts zwischen drei Verteilgut-Auslässen 43' für das pneumatische Verteilgut-Fördersystem.

Die in Figur 9 gezeigte Klappenstellung ("Mix") erzeugt eine Ausgabe einer Verteilgut-Teilmenge zum mittigen Verteilgut-Auslass 43' und somit in den Düngerhorizont und einer Verteilgut-Teilmenge zum rechten Verteilgut-Auslass 43'.

Es ist möglich, z. B. selektiv einzelne Zellenrotoren 31, 41, 41' still stehen zu lassen und somit zu deaktivieren, positions- und/oder richtungsabhängig die Ausgabe der unterschiedlichen Verteilgüter zwischen bestimmten Säscharen A, 10, Z zu wechseln und/oder unterschiedliche Verteilgüter zur gemeinsamen Ausgabe zu mixen. Auch können die Steuerelemente 32, 42, 42' und/oder andere Steuerorgane im pneumatischen Verteilgut-Fördersystem (z. B. Ventile, Klappen oder Weichen an einem oder mehreren Verteiltürmen 50, 60 und/oder direkt auf den Säscharen A, 10, Z) durch die Steuereinrichtung 20 angesteuert werden, um ein selektives Umschalten realisieren zu können.

Figur 10 zeigt eine Schnittansicht einer Zellenradschleuse 30 für eine landwirtschaftliche Verteilmaschine 100 gemäß einer anderen Ausführungsform der Erfindung.

Die Zellenradschleuse 30 dient zum volumetrischen Dosieren des Verteilguts. Sie umfasst zwei unabhängig voneinander betreibbare Zellenrotoren 31, die im Wesentlichen koaxial zueinander angeordnet sind und in einem gemeinsamen Dosiergehäuse untergebracht sind.

Die Zellenradschleuse 30 umfasst zwei Steuerelemente 32, vorzugsweise zwei Steuerklappen 32, zum wahlweisen Verteilen des Verteilguts zwischen vier Verteilgut-Auslässen 33 für das pneumatische Verteilgut-Fördersystem.

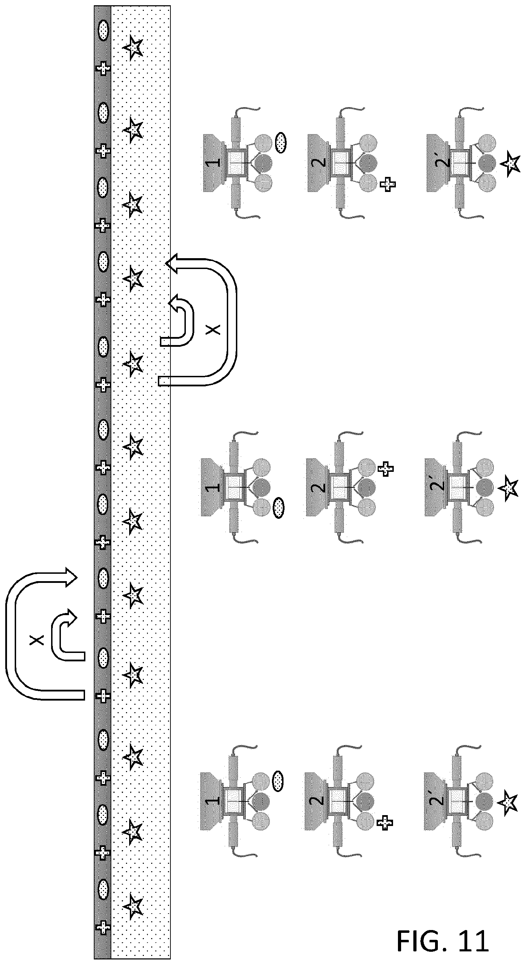

Figur 11 zeigt eine schematische Darstellung eines Umschaltplans für eine landwirtschaftliche Verteilmaschine 100 gemäß einer Ausführungsform der Erfindung zum Verteilen dreier unterschiedlicher Verteilgüter und vorzugsweise zum selektiven Umschalten einer Ausgabe zwischen den drei unterschiedlichen Verteilgütern, um ein gewünschtes Verteilgutausgabemuster mit gleichmäßig abwechselnder Reihenfolge der ausgebrachten Verteilgüter trotz einer im Wesentlichen 180°-Wende X fortsetzen zu können.

Die landwirtschaftliche Verteilmaschine 100 umfasst hierzu insbesondere drei Zellenradschleusen mit jeweils zwei Steuerelementen, wie z. B. unter Bezugnahme auf die Figuren 7 bis 10 beschrieben.

Das erste Verteilgut ist schematisch durch ein "Oval" (0) dargestellt. Das zweite Verteilgut ist schematisch durch ein "Plus" (+) dargestellt. Das dritte Verteilgut ist schematisch durch einen "Stern" (*) dargestellt.

Durch das selektive Umschalten der Steuerelemente 32, 42, 42' wie in Figur 11 gezeigt kann trotz einer nur 180°-Wende X der landwirtschaftlichen Verteilmaschine 100 das gewünschte Verteilgutausgabemuster fortgesetzt werden. Eine ineffiziente 360°-Wende wie in Figur 12 gezeigt ist nicht erforderlich.

Die Erfindung ist nicht auf die oben beschriebenen bevorzugten Ausführungsformen beschränkt. Vielmehr ist eine Vielzahl von Varianten und Abwandlungen möglich, die ebenfalls in den Schutzbereich der Ansprüche fallen.

Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Vorratsbehälter, insbesondere für erstes Verteilgut
- 2: Vorratsbehälter, insbesondere für zweites Verteilgut
- 2': Vorratsbehälter, insbesondere für drittes Verteilgut

- 30: Zellenradschleuse zum Dosieren des (insbesondere ersten) Verteilguts
- 40: Zellenradschleuse zum Dosieren des (insbesondere zweiten) Verteilguts
- 40': Zellenradschleuse zum Dosieren des (insbesondere dritten) Verteilguts

- 31: Zellenrotor
- 41: Zellenrotor
- 41': Zellenrotor

- 32: Steuerelement, insbesondere Steuerklappe
- 42: Steuerelement, insbesondere Steuerklappe
- 42': Steuerelement, insbesondere Steuerklappe

- 33: Verteilgut-Auslass, vorzugsweise in pneumatisches Verteilgut-Fördersystem
- 43: Verteilgut-Auslass, vorzugsweise in pneumatisches Verteilgut-Fördersystem
- 43': Verteilgut-Auslass, vorzugsweise in pneumatisches Verteilgut-Fördersystem

- 50: Verteilturm
- 60: Verteilturm
- 60': Verteilturm

- 70: Strömungserzeugungseinrichtung, insbesondere Gebläse

- 10: Säschare
- A: Säschar, vorzugsweise äußerstes Säschar
- Z: Säschar, vorzugsweise äußerstes Säschar

- 20: Steuereinrichtung
- I: Eingabeeinrichtung
- 100: landwirtschaftliche Verteilmaschine
- D: Vorwärtsfahrtrichtung
- 200: Antriebsfahrzeug

## Patentansprüche

1. Landwirtschaftliche Verteilmaschine (100) zum Verteilen unterschiedlicher Verteilgüter und vorzugsweise zum selektiven Umschalten einer Ausgabe zwischen den unterschiedlichen Verteilgütern, mit:
- einem ersten Vorratsbehälter (1) zur Aufnahme eines ersten Verteilguts,
- einem zweiten Vorratsbehälter (2) zur Aufnahme eines zweiten Verteilguts,
- einer Vielzahl an nebeneinander angeordneten Säscharen (A, 10, Z), vorzugsweise zur wahlweisen Ausgabe des Verteilguts,
- einem ersten Verteilturm (50) zum wahlweisen Verteilen des ersten Verteilguts und des zweiten Verteilguts,
- einem zweiten Verteilturm (60) zum wahlweisen Verteilen des ersten Verteilguts und des zweiten Verteilguts, und
- einer Steuereinrichtung (20) zum Steuern der Ausgabe des Verteilguts, und
i. wobei die Steuereinrichtung (20) ausgebildet ist, um die Ausgabe des Verteilguts eines ersten Säschares (A, 10, Z) vom ersten Verteilgut auf das zweite Verteilgut und/oder auf kein Verteilgut oder umgekehrt umzuschalten und die Ausgabe des Verteilguts eines zweiten Säschares (A, 10, Z) vom zweiten Verteilgut und/oder von keinem Verteilgut auf das erste Verteilgut oder umgekehrt umzuschalten, und
ii. wobei die Steuereinrichtung (20) ausgebildet ist, um für eine Anschlussfahrt, für eine Fahrtrichtungsänderung und/oder für eine im Wesentlichen 180°-Wende (X) der landwirtschaftlichen Verteilmaschine (100) das Umschalten auszuführen, dass ein gleichmäßiges Verteilgutausgabemuster mit abwechselnder Reihenfolge zwischen unterschiedlichen Verteilgütern fortgesetzt wird, und
iii. wobei die Steuereinrichtung (20) ausgebildet ist, um zum Umschalten zumindest eines von folgendem anzusteuern:
- zumindest einen einer Vielzahl an unabhängig voneinander betreibbaren Zellenrotoren (31, 41),
- zumindest ein Steuerelement (32, 42), vorzugsweise Steuerklappe (32, 42), zumindest einer Zellenradschleuse (30, 40), wobei das zumindest eine Steuerelement (32, 42) zum wahlweisen Verteilen des Verteilguts zwischen zumindest zwei Verteilgut-Auslässen (33, 43) ausgebildet ist, und/oder
- zumindest ein Steuerorgan im pneumatischen Verteilgut-Fördersystem zum Transportieren von dosiertem Verteilgut zu den Säscharen (A, 10, Z).

2. Landwirtschaftliche Verteilmaschine (100) nach Anspruch 1, **dadurch gekennzeichnet, dass** das erste Säschar (A, 10, Z) ein äußerstes Säschar (A) ist und das zweite Säschar (A, 10, Z) ein äußerstes Säschar (Z) ist.

3. Landwirtschaftliche Verteilmaschine (100) nach Anspruch 1 oder 2, **dadurch gekennzeichnet, dass** die Steuereinrichtung (20) ausgebildet ist, um die Ausgabe des Verteilguts zumindest einiger der Säschare (10) zwischen dem ersten Säschar (A) und dem zweiten Säschar (Z) vom ersten Verteilgut auf das zweite Verteilgut und/oder auf kein Verteilgut oder umgekehrt umzuschalten und vom zweiten Verteilgut und/oder von keinem Verteilgut auf das erste Verteilgut oder umgekehrt umzuschalten.

4. Landwirtschaftliche Verteilmaschine (100) nach einem der vorhergehenden Ansprüche, **dadurch gekennzeichnet, dass** die Steuereinrichtung (20) ausgebildet ist,
- um die Ausgabe des Verteilguts zumindest eines jeden zweiten Säschares (A, 10, Z) oder zumindest eines jeden dritten Säschares (A, 10, Z) vom ersten Verteilgut auf das zweite Verteilgut und/oder auf kein Verteilgut oder umgekehrt umzuschalten, oder
- um die Ausgabe des Verteilguts der Säschare (A, 10, Z) mit gerader Scharnummer vom ersten Verteilgut auf das zweite Verteilgut und/oder auf kein Verteilgut oder umgekehrt umzuschalten und die Ausgabe des Verteilguts der Säschare mit ungerader Scharnummer vom zweiten Verteilgut und/oder von keinem Verteilgut auf das erste Verteilgut umzuschalten oder umgekehrt.

5. Landwirtschaftliche Verteilmaschine (100) nach einem der vorhergehenden Ansprüche, **dadurch gekennzeichnet, dass** die Säschare (A, 10, Z) einer ersten Scharreihe zugeordnet sind.

6. Landwirtschaftliche Verteilmaschine (100) nach Anspruch 5, **dadurch gekennzeichnet, dass** die landwirtschaftliche Verteilmaschine (100) eine zweite Scharreihe mit einer Vielzahl an Säscharen (A', 10', Z1') aufweist und die erste Scharreihe und die zweite Scharreihe hintereinander angeordnet sind, wobei die Säschare (A, 10, Z) der ersten Scharreihe und die Säschare (A', 10', Z1') der zweiten Scharreihe in Längsrichtung der ersten Scharreihe und der zweiten Scharreihe versetzt zueinander angeordnet sind.

7. Landwirtschaftliche Verteilmaschine (100) nach Anspruch 6, **dadurch gekennzeichnet, dass** die Säschare (A, 10, Z) der ersten Scharreihe und die Säschare (A', 10', Z1') der zweiten Scharreihe die gleichen oder unterschiedliche Strichabstände aufweisen und/oder die gleichen oder unterschiedliche Arbeitstiefen aufweisen.

8. Landwirtschaftliche Verteilmaschine (100) nach einem der vorhergehenden Ansprüche, **dadurch gekennzeichnet, dass** die landwirtschaftliche Verteilmaschine (100) zumindest drei oder zumindest vier unabhängig voneinander betreibbare Zellenrotoren (31, 41) zum insbesondere volumetrischen Dosieren des Verteilguts aufweist.

9. Landwirtschaftliche Verteilmaschine (100) nach einem der vorhergehenden Ansprüche, **dadurch gekennzeichnet, dass** die landwirtschaftliche Verteilmaschine (100)
- zumindest eine erste Zellenradschleuse (30) mit zumindest einem ersten Zellenrotor (31) zum Dosieren des ersten Verteilguts aufweist, und
- zumindest eine zweite Zellenradschleuse (40) mit zumindest einem zweiten Zellenrotor (41) zum Dosieren des zweiten Verteilguts aufweist, und
- vorzugsweise der zumindest eine erste Zellenrotor (31) und der zumindest eine zweite Zellenrotor (41) unabhängig voneinander betreibbar sind.

10. Landwirtschaftliche Verteilmaschine (100) nach Anspruch 9, **dadurch gekennzeichnet, dass**
- die zumindest eine erste Zellenradschleuse (30) zumindest zwei unabhängig voneinander betreibbare erste Zellenrotoren (31) zum Dosieren des ersten Verteilguts aufweist, und
- die zumindest eine zweite Zellenradschleuse (40) zumindest zwei unabhängig voneinander betreibbare zweite Zellenrotoren (41) zum Dosieren des zweiten Verteilguts aufweist, und
- vorzugsweise die zumindest zwei ersten Zellenrotoren (31) und die zumindest zwei zweiten Zellenrotoren (41) unabhängig voneinander betreibbar sind.

11. Landwirtschaftliche Verteilmaschine (100) nach Anspruch 10, **dadurch gekennzeichnet, dass**
- die zumindest zwei ersten Zellenrotoren (31) in einem gemeinsamen Dosiergehäuse untergebracht sind und/oder koaxial zueinander angeordnet sind, und/oder
- die zumindest zwei zweiten Zellenrotoren (41) in einem gemeinsamen Dosiergehäuse untergebracht sind und/oder koaxial zueinander angeordnet sind.

12. Landwirtschaftliche Verteilmaschine (100) nach einem der Ansprüche 9 bis 11, **dadurch gekennzeichnet, dass**
- die erste Zellenradschleuse (30) zumindest zwei Steuerelemente (32), vorzugsweise Steuerklappen (32), zum wahlweisen Verteilen des ersten Verteilguts zwischen zumindest zwei Verteilgut-Auslässen (33) aufweist, und/oder
- die zweite Zellenradschleuse (40) zumindest zwei Steuerelemente (42), vorzugsweise Steuerklappen (42), zum wahlweisen Verteilen des zweiten Verteilguts zwischen zumindest zwei Verteilgut-Auslässen (43) aufweist.

13. Landwirtschaftliche Verteilmaschine (100) nach einem der vorhergehenden Ansprüche, **dadurch gekennzeichnet, dass**
- der erste Verteilturm (50) zur Verteilgutversorgung mit zumindest zwei oder zumindest drei unabhängig voneinander betreibbaren Zellenrotoren (31, 41) in Verbindung bringbar ist, und/oder
- der zweite Verteilturm (60) zur Verteilgutversorgung mit zumindest einer, zumindest zwei oder zumindest drei unabhängig voneinander betreibbaren Zellenrotoren (31, 41) in Verbindung bringbar ist.

14. Landwirtschaftliche Verteilmaschine (100) nach einem der vorhergehenden Ansprüche, **dadurch gekennzeichnet, dass** mehrere der Säschare (A, 10, Z)
- ausgebildet sind, um gemeinsam das erste Verteilgut und das zweite Verteilgut auszugeben, und/oder
- zur Verteilgutversorgung mit dem ersten Verteilturm (50) und dem zweiten Verteilturm (60) verbunden sind.

15. Landwirtschaftliche Verteilmaschine (100) nach einem der vorhergehenden Ansprüche, **dadurch gekennzeichnet, dass** die Steuereinrichtung (20) ausgebildet ist, um das Umschalten in Abhängigkeit vorbestimmter Parameter durchzuführen.

16. Landwirtschaftliche Verteilmaschine (100) nach Anspruch 15, **dadurch gekennzeichnet, dass** die Parameter zumindest eines von folgendem umfassen:
- flächenspezifische Feldkonturen oder flächenspezifische Feldeigenschaften,
- Art und/oder Beschaffenheit der unterschiedlichen Verteilgüter,
- prozessspezifische Anforderungen, insbesondere durch nachfolgende Feldarbeiten erforderliche Fahrspuren, und/oder
- Ortskoordinaten eines Positionsbestimmungssystems.

17. Landwirtschaftliche Verteilmaschine (100) nach einem der vorhergehenden Ansprüche, **dadurch gekennzeichnet, dass** die Steuereinrichtung (20) ausgebildet ist, um das Umschalten in Abhängigkeit einer Fahrtrichtung (D) und/oder einer Position der landwirtschaftlichen Verteilmaschine (100) auszuführen.

18. Landwirtschaftliche Verteilmaschine (100) nach einem der vorhergehenden Ansprüche, **dadurch gekennzeichnet, dass** eine Vorrangschaltung zur Verfügung gestellt ist, um das Umschalten zu übersteuern.

19. Landwirtschaftliche Verteilmaschine (100) nach einem der vorhergehenden Ansprüche, **dadurch gekennzeichnet, dass** eine Eingabeeinrichtung (I) zur Verfügung gestellt ist, mittels der ein Ausführungsplan an die Steuereinrichtung (20) übermittelbar ist, wobei der Ausführungsplan das Umschalten definiert.

20. Landwirtschaftliche Verteilmaschine (100) nach Anspruch 19, **dadurch gekennzeichnet, dass** die Eingabeeinrichtung (I) zur manuellen Eingabe des Ausführungsplans durch eine Bedienperson ausgebildet ist und/oder eine Schnittstelle zur Übermittlung des Ausführungsplans in Form eines Datenpakets umfasst.

21. Landwirtschaftliche Verteilmaschine (100) nach einem der vorhergehenden Ansprüche, **dadurch gekennzeichnet, dass** die Steuereinrichtung (20) ausgebildet ist, um insbesondere verteilgutabhängig eine Arbeitstiefe, einen Schardruck und/oder Strichabstände mehrerer Säschare (A, 10, Z) veränderbar zu steuern.

22. Landwirtschaftliche Verteilmaschine (100) nach einem der vorhergehenden Ansprüche, **dadurch gekennzeichnet, dass** die landwirtschaftliche Verteilmaschine (100)
- einen dritten Vorratsbehälter (2') zur Aufnahme eines dritten Verteilguts aufweist, und/oder
- einen dritten Verteilturm (60') aufweist.

23. Landwirtschaftliche Verteilmaschine (100) nach Anspruch 22, **dadurch gekennzeichnet, dass** die Steuereinrichtung (20) ausgebildet ist, um die Ausgabe des Verteilguts des ersten Säschares (A, 10, Z) zwischen zumindest drei unterschiedlichen Verteilgütern umzuschalten und die Ausgabe des Verteilguts des zweiten Säschares (A, 10, Z) zwischen zumindest drei unterschiedlichen Verteilgütern umzuschalten.

24. Verfahren zum Steuern einer landwirtschaftlichen Verteilmaschine (100) zum Verteilen unterschiedlicher Verteilgüter und vorzugsweise zum selektiven Umschalten einer Ausgabe zwischen den unterschiedlichen Verteilgütern, vorzugsweise einer landwirtschaftliche Verteilmaschine (100) nach einem der vorhergehenden Ansprüche, mit:
- einem ersten Vorratsbehälter (1) zur Aufnahme eines ersten Verteilguts,
- einem zweiten Vorratsbehälter (2) zur Aufnahme eines zweiten Verteilguts,
- einer Vielzahl an nebeneinander angeordneten Säscharen (A, 10, Z), vorzugsweise zur wahlweisen Ausgabe des Verteilguts,
- einem ersten Verteilturm (50) zum wahlweisen Verteilen des ersten Verteilguts und des zweiten Verteilguts,
- einem zweiten Verteilturm (60) zum wahlweisen Verteilen des ersten Verteilguts und des zweiten Verteilguts, und
- einer Steuereinrichtung (20) zum Steuern der Ausgabe des Verteilguts, wobei
i. die Steuereinrichtung (20) die Ausgabe des Verteilguts eines ersten Säschares (A, 10, Z) vom ersten Verteilgut auf das zweite Verteilgut und/oder auf kein Verteilgut oder umgekehrt umschaltet und die Ausgabe des Verteilguts eines zweiten Säschares (A, 10, Z) vom zweiten Verteilgut und/oder von keinem Verteilgut auf das erste Verteilgut oder umgekehrt umschaltet, und
ii. wobei die Steuereinrichtung (20) für eine Anschlussfahrt, für eine Fahrtrichtungsänderung und/oder für eine im Wesentlichen 180°-Wende (X) der landwirtschaftlichen Verteilmaschine (100) das Umschalten ausführt, dass ein gleichmäßiges Verteilgutausgabemuster mit abwechselnder Reihenfolge zwischen unterschiedlichen Verteilgütern fortgesetzt wird, und
iii. wobei die Steuereinrichtung (20) ausgebildet ist, um zum Umschalten zumindest eines von folgendem anzusteuern:
- zumindest einen einer Vielzahl an unabhängig voneinander betreibbaren Zellenrotoren (31, 41),
- zumindest ein Steuerelement (32, 42), vorzugsweise Steuerklappe (32, 42), zumindest einer Zellenradschleuse (30, 40), wobei das zumindest eine Steuerelement (32, 42) zum wahlweisen Verteilen des Verteilguts zwischen zumindest zwei Verteilgut-Auslässen (33, 43) ausgebildet ist, und/oder
- zumindest ein Steuerorgan im pneumatischen Verteilgut-Fördersystem zum Transportieren von dosiertem Verteilgut zu den Säscharen (A, 10, Z).

## Claims

1. Agricultural distribution machine (100) for distributing various distribution materials and preferably for selectively switching dispensing between the various distribution materials, comprising:
- a first storage container (1) for receiving a first distribution material,
- a second storage container (2) for receiving a second distribution material,
- a large number of coulters (A, 10, Z) arranged beside one another, preferably for optionally dispensing the distribution material,
- a first distribution tower (50) for the optional distribution of the first distribution material and of the second distribution material,
- a second distribution tower (60) for the optional distribution of the first distribution material and of the second distribution material, and
- a control device (20) for controlling the dispensing of the distribution material, and
i. wherein the control device (20) is designed to switch the dispensing of the distribution material by a first coulter (A, 10, Z) from the first distribution material to the second distribution material and/or to no distribution material or vice versa, and to switch the dispensing of the distribution material by a second coulter (A, 10, Z) from the second distribution material and/or from no distribution material to the first distribution material or vice versa, and
ii. wherein the control device (20) is designed to make the switch for onward movement, for a change in the direction of travel and/or for a substantially 180° turn (X) of the agricultural distribution machine (100), so that a uniform dispensing pattern of distribution material is continued with an alternating order between various distribution materials, and
iii. wherein the control device (20) is designed to control at least one of the following for the switch:
- at least one of a large number of cell rotors (31, 41) that can be operated independently of one another,
- at least one control element (32, 42), preferably a control flap (32, 42), of at least one star feeder (30, 40), wherein the at least one control element (32, 42) is designed for the optional dispensing of the distribution material between at least two outlets (33, 43) for the distribution material, and/or
- at least one control member in the pneumatic conveying system for the distribution material for transporting metered distribution material to the coulters (A, 10, Z).

2. Agricultural distribution machine (100) according to Claim 1, **characterized in that** the first coulter (A, 10, Z) is an outermost coulter (A) and the second coulter (A, 10, Z) is an outermost coulter (Z).

3. Agricultural distribution machine (100) according to Claim 1 or 2, **characterized in that** the control device (20) is designed to switch the dispensing of the distribution material by at least some of the coulters (10) between the first coulter (A) and the second coulter (Z) from the first distribution material to the second distribution material and/or to no distribution material or vice versa, and from the second distribution material and/or from no distribution material to the first distribution material or vice versa.

4. Agricultural distribution machine (100) according to one of the preceding claims, **characterized in that** the control device (20) is designed
- to switch the dispensing of the distribution material by at least each second coulter (A, 10, Z) or at least each third coulter (A, 10, Z) from the first distribution material to the second distribution material and/or to no distribution material or vice versa, or
- to switch the dispensing of the distribution material by the coulters (A, 10, Z) with an even coulter number from the first distribution material to the second distribution material and/or to no distribution material or vice versa, and to switch the dispensing of the distribution material by the coulters with an odd coulter number from the second distribution material and/or from no distribution material to the first distribution material or vice versa.

5. Agricultural distribution machine (100) according to one of the preceding claims, **characterized in that** the coulters (A, 10, Z) are assigned to a first row of coulters.

6. Agricultural distribution machine (100) according to Claim 5, **characterized in that** the agricultural distribution machine (100) has a second row of coulters with a large number of coulters (A', 10', Z1') and the first row of coulters and the second row of coulters are arranged behind one another, wherein the coulters (A, 10, Z) of the first row of coulters and the coulters (A', 10', Z1') of the second row of coulters are arranged to be offset from one another in the longitudinal direction of the first row of coulters and of the second row of coulters.

7. Agricultural distribution machine (100) according to Claim 6, **characterized in that** the coulters (A, 10, Z) of the first row of coulters and the coulters (A', 10', Z1') of the second row of coulters have the same or different line spacings and/or the same or different working depths.

8. Agricultural distribution machine (100) according to one of the preceding claims, **characterized in that** the agricultural distribution machine (100) has at least three or at least four cell rotors (31, 41) that can be operated independently of one another for the in particular volumetric metering of the distribution material.

9. Agricultural distribution machine (100) according to one of the preceding claims, **characterized in that** the agricultural distribution machine (100)
- has at least one first star feeder (30) with at least one first cell rotor (31) for metering the first distribution material, and
- has at least one second star feeder (40) with at least one second cell rotor (41) for metering the second distribution material, and
- preferably, the at least one first cell rotor (31) and the at least one second cell rotor (41) can be operated independently of one another.

10. Agricultural distribution machine (100) according to Claim 9, **characterized in that**
- the at least one first star feeder (30) has at least two first cell rotors (31) that can be operated independently of one another for metering the first distribution material, and
- the at least one second star feeder (40) has at least two second cell rotors (41) that can be operated independently of one another for metering the second distribution material, and
- preferably, the at least two first cell rotors (31) and the at least two second cell rotors (41) can be operated independently of one another.

11. Agricultural distribution machine (100) according to Claim 10, **characterized in that**
- the at least two first cell rotors (31) are accommodated in a common metering housing and/or are arranged coaxially with one another, and/or
- the at least two second cell rotors (41) are accommodated in a common metering housing and/or are arranged coaxially with one another.

12. Agricultural distribution machine (100) according to one of Claims 9 to 11, **characterized in that**
- the first star feeder (30) has at least two control elements (32), preferably control flaps (32), for the optional distribution of the first distribution material between at least two distribution material outlets (33), and/or
- the second star feeder (40) has at least two control elements (42), preferably control flaps (42), for the optional distribution of the second distribution material between at least two distribution material outlets (43).

13. Agricultural distribution machine (100) according to one of the preceding claims, **characterized in that**
- the first distribution tower (50) for supplying the distribution material can be connected to at least two or at least three cell rotors (31, 41) that can be operated independently of one another, and/or
- the second distribution tower (60) for supplying the distribution material can be connected to at least one, at least two or at least three cell rotors (31, 41) that can be operated independently of one another.

14. Agricultural distribution machine (100) according to one of the preceding claims, **characterized in that** a plurality of the coulters (A, 10, Z)
- are designed to dispense the first distribution material and the second distribution material jointly, and/or
- are connected to the first distribution tower (50) and the second distribution tower (60) to supply the distribution material.

15. Agricultural distribution machine (100) according to one of the preceding claims, **characterized in that** the control device (20) is designed to make the switch as a function of predetermined parameters.

16. Agricultural distribution machine (100) according to Claim 15, **characterized in that** the parameters comprise at least one of the following:
- area-specific field contours or area-specific field properties,
- the type and/or nature of the various distribution materials,
- process-specific requirements, in particular lanes required by subsequent field work, and/or
- location coordinates of a position determining system.

17. Agricultural distribution machine (100) according to one of the preceding claims, **characterized in that** the control device (20) is designed to make the switch depending on a direction of travel (D) and/or a position of the agricultural distribution machine (100).

18. Agricultural distribution machine (100) according to one of the preceding claims, **characterized in that** a priority circuit is provided in order to override the switching.

19. Agricultural distribution machine (100) according to one of the preceding claims, **characterized in that** an input device (I) is provided, by means of which an execution plan can be transmitted to the control device (20), the execution plan defining the switching.

20. Agricultural distribution machine (100) according to Claim 19, **characterized in that** the input device (I) is designed for the manual input of the execution plan by an operator and/or comprises an interface for transmitting the execution plan in the form of a data packet.

21. Agricultural distribution machine (100) according to one of the preceding claims, **characterized in that** the control device (20) is designed to control a working depth, a coulter pressure and/or line spacings of a plurality of coulters (A, 10, Z) variably, in particular depending on the distribution material.

22. Agricultural distribution machine (100) according to one of the preceding claims, **characterized in that** the agricultural distribution machine (100)
- has a third storage container (2') for receiving a third distribution material, and/or
- has a third distribution tower (60').

23. Agricultural distribution machine (100) according to Claim 22, **characterized in that** the control device (20) is designed to switch the dispensing of the distribution material by the first coulter (A, 10, Z) between at least three different distribution materials and to switch the dispensing of the distribution material by the second coulter (A, 10, Z) between at least three different distribution materials.

24. Method for controlling an agricultural distribution machine (100) for distributing various distribution materials and preferably for the selective switching of dispensing between the various distribution materials, preferably an agricultural distribution machine (100) according to one of the preceding claims, comprising:
- a first storage container (1) for receiving a first distribution material,
- a second storage container (2) for receiving a second distribution material,
- a large number of coulters (A, 10, Z) arranged beside one another, preferably for optionally dispensing the distribution material,
- a first distribution tower (50) for the optional distribution of the first distribution material and of the second distribution material,
- a second distribution tower (60) for the optional distribution of the first distribution material and of the second distribution material, and
- a control device (20) for controlling the dispensing of the distribution material, wherein
i. the control device (20) is designed to switch the dispensing of the distribution material by a first coulter (A, 10, Z) from the first distribution material to the second distribution material and/or to no distribution material or vice versa, and to switch the dispensing of the distribution material by a second coulter (A, 10, Z) from the second distribution material and/or from no distribution material to the first distribution material or vice versa, and
ii. wherein the control device (20) is designed to make the switch for onward movement, for a change in the direction of travel and/or for a substantially 180° turn (X) of the agricultural distribution machine (100), so that a uniform dispensing pattern of distribution material is continued with an alternating order between various distribution materials, and
iii. wherein the control device (20) is designed to control at least one of the following for the switching:
- at least one of a large number of cell rotors (31, 41) that can be operated independently of one another,
- at least one control element (32, 42), preferably a control flap (32, 42), of at least one star feeder (30, 40), wherein the at least one control element (32, 42) is designed for the optional distribution of the distribution material between at least two distribution material outlets (33, 43), and/or
- at least one control member in the pneumatic conveying system for the distribution material for transporting metered distribution material to the coulters (A, 10, Z).

## Revendications

1. Machine d'épandage agricole (100) permettant de distribuer divers produits d'épandage et de préférence permettant de commuter sélectivement une sortie entre les divers produits d'épandage, comprenant :
- un premier réservoir (1) servant à recevoir un premier produit d'épandage,
- un deuxième réservoir (2) servant à recevoir un deuxième produit d'épandage,
- une pluralité de socs de semoir (A, 10, Z) disposés les uns à côté des autres, de préférence servant à faire sortir sélectivement le produit d'épandage,
- une première tour de distribution (50) permettant de distribuer sélectivement le premier produit d'épandage et le deuxième produit d'épandage,
- une deuxième tour de distribution (60) permettant de distribuer sélectivement le premier produit d'épandage et le deuxième produit d'épandage, et
- un dispositif de commande (20) servant à commander la sortie du produit d'épandage, et
i. le dispositif de commande (20) étant réalisé pour commuter la sortie du produit d'épandage d'un premier soc de semoir (A, 10, Z) du premier produit d'épandage au deuxième produit d'épandage et/ou à aucun produit d'épandage ou inversement et pour commuter la sortie du produit d'épandage d'un deuxième soc de semoir (A, 10, Z) du deuxième produit d'épandage et/ou d'aucun produit d'épandage au premier produit d'épandage ou inversement, et
ii. le dispositif de commande (20) étant réalisé pour effectuer la commutation pour une conduite de raccordement, pour un changement de direction de conduite et/ou pour un virage sensiblement à 180° (X) de la machine d'épandage agricole (100), de telle sorte qu'un motif de sortie de produit d'épandage régulier à séquence alternée entre divers produits d'épandage soit continué,
et
iii. le dispositif de commande (20) étant réalisé pour commuter au moins l'un des éléments suivants :
- au moins un rotor parmi une pluralité de rotors cellulaires (31, 41) pouvant fonctionner indépendamment les uns des autres,
- au moins un élément de commande (32, 42), de préférence un clapet de commande (32, 42), d'au moins un sas à roue cellulaire (30,40), l'au moins un élément de commande (32, 42) étant réalisé pour distribuer sélectivement le produit d'épandage entre au moins deux sorties de produit d'épandage (33, 43), et/ou
- au moins un organe de commande dans le système pneumatique de convoyage de produit d'épandage servant à transporter le produit d'épandage dosé jusqu'aux socs de semoir (A, 10, Z).

2. Machine d'épandage agricole (100) selon la revendication 1, **caractérisée en ce que** le premier soc de semoir (A, 10, Z) est un soc de semoir (A) le plus à l'extérieur et le deuxième soc de semoir (A, 10, Z) est un soc de semoir (Z) le plus à l'extérieur.

3. Machine d'épandage agricole (100) selon la revendication 1 ou 2, **caractérisée en ce que** le dispositif de commande (20) est réalisé pour commuter la sortie du produit d'épandage d'au moins quelques-uns des socs de semoir (10) entre le premier soc de semoir (A) et le deuxième soc de semoir (Z) du premier produit d'épandage au deuxième produit d'épandage et/ou à aucun produit d'épandage ou inversement et pour la commuter du deuxième produit d'épandage et/ou d'aucun produit d'épandage au premier produit d'épandage ou inversement.

4. Machine d'épandage agricole (100) selon l'une des revendications précédentes, **caractérisée en ce que** le dispositif de commande (20) est réalisé
- pour commuter la sortie du produit d'épandage au moins d'un soc de semoir sur deux (A, 10, Z) ou au moins d'un soc de semoir sur trois (A, 10, Z) du premier produit d'épandage au deuxième produit d'épandage et/ou à aucun produit d'épandage ou inversement, ou
- pour commuter la sortie du produit d'épandage des socs de semoir (A, 10, Z) de numéro de soc pair du premier produit d'épandage au deuxième produit épandage et/ou à aucun produit d'épandage ou inversement et la sortie du produit d'épandage des socs de semoir de numéro de soc impair du deuxième produit d'épandage et/ou d'aucun produit d'épandage au premier produit d'épandage ou inversement.

5. Machine d'épandage agricole (100) selon l'une des revendications précédentes, **caractérisée en ce que** les socs de semoir (A, 10, Z) sont associés à une première rangée de socs.

6. Machine d'épandage agricole (100) selon la revendication 5, **caractérisée en ce que** la machine d'épandage agricole (100) présente une deuxième rangée de socs dotée d'une pluralité de socs de semoir (A', 10', Z1') et la première rangée de socs et la deuxième rangée de socs sont disposées l'une derrière l'autre, les socs de semoir (A, 10, Z) de la première rangée de socs et les socs de semoir (A', 10', Z1') de la deuxième rangée de socs étant décalés les uns par rapport aux autres dans la direction longitudinale de la première rangée de socs et de la deuxième rangée de socs.

7. Machine d'épandage agricole (100) selon la revendication 6, **caractérisée en ce que** les socs de semoir (A, 10, Z) de la première rangée de socs et les socs de semoir (A', 10', Z1') de la deuxième rangée de socs présentent les mêmes interrangs ou des interrangs différents et/ou les mêmes profondeurs de travail ou des profondeurs de travail différentes.

8. Machine d'épandage agricole (100) selon l'une des revendications précédentes, **caractérisée en ce que** la machine d'épandage agricole (100) présente au moins trois ou au moins quatre rotors cellulaires (31, 41) pouvant fonctionner indépendamment les uns des autres servant au dosage en particulier volumétrique du produit d'épandage.

9. Machine d'épandage agricole (100) selon l'une des revendications précédentes, **caractérisée en ce que** la machine d'épandage agricole (100)
- présente au moins un premier sas à roue cellulaire (30) doté d'au moins un premier rotor cellulaire (31) servant au dosage du premier produit d'épandage, et
- au moins un deuxième sas à roue cellulaire (40) doté d'au moins un deuxième rotor cellulaire (41) servant au dosage du deuxième produit d'épandage, et
- de préférence l'au moins un premier rotor cellulaire (31) et l'au moins un deuxième rotor cellulaire (41) peuvent fonctionner indépendamment les uns des autres.

10. Machine d'épandage agricole (100) selon la revendication 9, **caractérisée en ce que**
- l'au moins un premier sas à roue cellulaire (30) présente au moins deux premiers rotors cellulaires (31) pouvant fonctionner indépendamment les uns des autres servant au dosage du premier produit d'épandage, et
- l'au moins un deuxième sas à roue cellulaire (40) présente au moins deux deuxièmes rotors cellulaires (41) pouvant fonctionner indépendamment les uns des autres servant au dosage du deuxième produit d'épandage, et
- de préférence les au moins deux premiers rotors cellulaires (31) et les au moins deux deuxièmes rotors cellulaires (41) peuvent fonctionner indépendamment les uns des autres.

11. Machine d'épandage agricole (100) selon la revendication 10, **caractérisée en ce que**
- les au moins deux premiers rotors cellulaires (31) sont logés dans un boîtier de dosage commun et/ou sont disposés de manière coaxiale les uns par rapport aux autres, et/ou
- les au moins deux deuxièmes rotors cellulaires (41) sont logés dans un boîtier de dosage commun et/ou sont disposés de manière coaxiale les uns par rapport aux autres.

12. Machine d'épandage agricole (100) selon l'une des revendications 9 à 11, **caractérisée en ce que**
- le premier sas à roue cellulaire (30) présente au moins deux éléments de commande (32), de préférence des clapets de commande (32), servant à distribuer sélectivement le premier produit d'épandage entre au moins deux sorties de produit d'épandage (33), et/ou
- le deuxième sas à roue cellulaire (40) présente au moins deux éléments de commande (42), de préférence des clapets de commande (42), servant à distribuer sélectivement le deuxième produit d'épandage entre au moins deux sorties de produit d'épandage (43).

13. Machine d'épandage agricole (100) selon l'une des revendications précédentes, **caractérisée en ce que**
- la première tour de distribution (50) peut être amenée en liaison avec au moins deux ou au moins trois rotors cellulaires (31, 41) pouvant fonctionner indépendamment les uns des autres pour l'alimentation en produit d'épandage, et/ou
- la deuxième tour de distribution (60) peut être amenée en liaison avec au moins un, au moins deux ou au moins trois rotors cellulaires (31, 41) pouvant fonctionner indépendamment les uns des autres pour l'alimentation en produit d'épandage.

14. Machine d'épandage agricole (100) selon l'une des revendications précédentes, **caractérisée en ce que** plusieurs des socs de semoir (A, 10, Z)
- sont réalisés pour faire sortir ensemble le premier produit d'épandage et le deuxième produit d'épandage, et/ou
- sont reliés à la première tour de distribution (50) et à la deuxième tour de distribution (60) pour l'alimentation en produit d'épandage.

15. Machine d'épandage agricole (100) selon l'une des revendications précédentes, **caractérisée en ce que** le dispositif de commande (20) est réalisé pour effectuer la commutation en fonction de paramètres prédéfinis.

16. Machine d'épandage agricole (100) selon la revendication 15, **caractérisée en ce que** les paramètres comprennent au moins l'un des éléments suivants :
- des contours de champ spécifiques à la surface ou des propriétés de champ spécifiques à la surface,
- le type et/ou la nature des divers produits d'épandage,
- des exigences spécifiques à un processus, en particulier des voies de circulation requises pour des travaux agricoles subséquents, et/ou
- des coordonnées spatiales d'un système de détermination de position.

17. Machine d'épandage agricole (100) selon l'une des revendications précédentes, **caractérisée en ce que** le dispositif de commande (20) est réalisé pour effectuer la commutation en fonction d'une direction de conduite (D) et/ou d'une position de la machine d'épandage agricole (100).

18. Machine d'épandage agricole (100) selon l'une des revendications précédentes, **caractérisée en ce qu'**un circuit prioritaire est fourni, afin de surréguler la commutation.

19. Machine d'épandage agricole (100) selon l'une des revendications précédentes, **caractérisée en ce qu'**un dispositif d'entrée (I) est fourni, au moyen duquel un plan d'exécution peut être transmis au dispositif de commande (20), le plan d'exécution définissant la commutation.

20. Machine d'épandage agricole (100) selon la revendication 19, **caractérisée en ce que** le dispositif d'entrée (I) est réalisé pour l'entrée manuelle du plan d'exécution par un opérateur et/ou comprend une interface pour la transmission du plan d'exécution sous la forme d'un paquet de données.

21. Machine d'épandage agricole (100) selon l'une des revendications précédentes, **caractérisée en ce que** le dispositif de commande (20) est réalisé pour commander de manière modifiable, en particulier en fonction du produit d'épandage, une profondeur de travail, une pression de soc et/ou des interrangs de plusieurs socs de semoir (A, 10, Z).

22. Machine d'épandage agricole (100) selon l'une des revendications précédentes, **caractérisée en ce que** la machine d'épandage agricole (100)
- présente un troisième réservoir (2') servant à recevoir un troisième produit d'épandage, et/ou
- une troisième tour de distribution (60').

23. Machine d'épandage agricole (100) selon la revendication 22, **caractérisée en ce que** le dispositif de commande (20) est réalisé pour commuter la sortie du produit d'épandage du premier soc de semoir (A, 10, Z) entre au moins trois produits d'épandage différents et pour commuter la sortie du produit d'épandage du deuxième soc de semoir (A, 10, Z) entre au moins trois produits d'épandage différents.

24. Procédé de commande d'une machine d'épandage agricole (100) permettant de distribuer divers produits d'épandage et de préférence permettant de commuter sélectivement une sortie entre les divers produits d'épandage, de préférence d'une machine d'épandage agricole (100) selon l'une des revendications précédentes, comprenant :
- un premier réservoir (1) servant à recevoir un premier produit d'épandage,
- un deuxième réservoir (2) servant à recevoir un deuxième produit d'épandage,
- une pluralité de socs de semoir (A, 10, Z) disposés les uns à côté des autres, de préférence servant à faire sortir sélectivement le produit d'épandage,
- une première tour de distribution (50) permettant de distribuer sélectivement le premier produit d'épandage et le deuxième produit d'épandage,
- une deuxième tour de distribution (60) permettant de distribuer sélectivement le premier produit d'épandage et le deuxième produit d'épandage, et
- un dispositif de commande (20) servant à commander la sortie du produit d'épandage,
i. le dispositif de commande (20) commutant la sortie du produit d'épandage d'un premier soc de semoir (A, 10, Z) du premier produit d'épandage au deuxième produit d'épandage et/ou à aucun produit d'épandage ou inversement et commutant la sortie du produit d'épandage d'un deuxième soc de semoir (A, 10, Z) du deuxième produit d'épandage et/ou d'aucun produit d'épandage au premier produit d'épandage ou inversement, et
ii. le dispositif de commande (20) effectuant la commutation pour une conduite de raccordement, pour un changement de direction de conduite et/ou pour un virage sensiblement à 180° (X) de la machine d'épandage agricole (100), de telle sorte qu'un motif de sortie de produit d'épandage régulier à séquence alternée entre divers produits d'épandage soit continué,
et
iii. le dispositif de commande (20) étant réalisé pour commuter au moins l'un des éléments suivants :
- au moins un rotor parmi une pluralité de rotors cellulaires (31, 41) pouvant fonctionner indépendamment les uns des autres,
- au moins un élément de commande (32, 42), de préférence un clapet de commande (32, 42), d'au moins un sas à roue cellulaire (30,40), l'au moins un élément de commande (32, 42) étant réalisé pour distribuer sélectivement le produit d'épandage entre au moins deux sorties de produit d'épandage (33, 43), et/ou
- au moins un organe de commande dans le système pneumatique de convoyage de produit d'épandage servant à transporter le produit d'épandage dosé jusqu'aux socs de semoir (A, 10, Z).
